# EUROPÄISCHE PATENTSCHRIFT

(11) **EP 3 529 481 B1**
(45) Veröffentlichungstag und Bekanntmachung des Hinweises auf die Patenterteilung: **30.09.2020**
(21) Anmeldenummer: 17829914.5
(22) Anmeldetag: 17.10.2017
(51) Int. Cl.: F02M 25/035, F02B 43/12, F02M 25/028, F28D 21/00, F28D 7/10, F28F 13/06, F02B 47/02, C01B 3/04, F02M 25/022, C01B 13/02, F01N 3/26, F28F 13/10

(54) **VERFAHREN ZUM BETREIBEN EINES ANTRIEBSAGGREGATES MIT HOHEM WIRKUNGSGRAD UND ANTRIEBSAGGREGAT**
METHOD OF DRIVING A POWER UNIT WITH HIGH EFFICIENCY AND POWER UNIT
PROCÉDÉ DE COMMANDE D'UN GROUPE MOTOPROPULSEUR AVEC HAUTE EFFICACITÉ ET GROUPE MOTOPROPULSEUR

(30) Priorität: 22.10.2016 DE 102016012669
(43) Veröffentlichungstag der Anmeldung: 28.08.2019
(73) Patentinhaber: LaRoSe UG, 53721 Siegburg (DE)
(72) Erfinder: ROTTLÄNDER, Heribert, 51491 Overath (DE)
(74) Vertreter: Hauck Patentanwaltspartnerschaft mbB
(86) Internationale Anmeldenummer: PCT/DE2017/000346
(87) Internationale Veröffentlichungsnummer: WO 2018/072772

(56) Entgegenhaltungen:
- EP-A1- 1 780 388
- WO-A1-92/22679
- DE-A1- 4 140 650
- US-A- 3 717 129
- US-A- 4 267 976
- US-A- 5 671 701
- US-A1- 2002 162 649

## Beschreibung

Die vorliegende Erfindung betrifft ein Verfahren zum Betreiben eines Antriebsaggregates. Sie ist ferner auf ein Antriebsaggregat zur Durchführung eines derartigen Verfahrens gerichtet.

Aus der nicht vorveröffentlichten europäischen Patentanmeldung EP 3 156 637 A1 sind ein Verfahren zum Betreiben eines Antriebsaggregates und ein Antriebsaggregat bekannt. Bei dem bekannten Verfahren erfolgt eine thermolytische Zersetzung von Wasserdampf bei erhöhter Temperatur in Anwesenheit mindestens eines Katalysators zu Wasserstoff und Sauerstoff. Die thermolytische Zersetzung findet in einem Wärmetauscher statt, der als Wirbelrohr ausgebildet ist, wobei der Wasserdampf durch ein mit einem Katalysator versehenes Innenrohr und das Abgas des Antriebsaggregates durch das Außenrohr des Wirbelrohres geführt werden. Durch den dabei stattfindenden Wärmeaustausch wird ein Teil des Wasserdampfes thermolytisch zu H₂ und O₂ zersetzt. Das auf diese Weise erhaltene Gemisch aus dem erzeugten Wasserstoff und Sauerstoff sowie restlichem Wasserdampf wird in einen Brennraum des Antriebsaggregates geführt und dort mithilfe eines zündfähigen Kraftstoffs gezündet, wodurch ein Antriebselement des Antriebsaggregates angetrieben wird.

Aus der DE 36 07 007 A1 sind eine Vorrichtung zur thermischen Spaltungsaufbereitung flüssiger Brennstoffe für Brennkraftmaschinen und ein Betriebsverfahren für diese bekannt. Es geht hierbei um die Spaltung von bestimmten flüssigen paraffinischen oder aromatischen Kohlenwasserstoffen in ein für den Motorbetrieb geeignetes Spaltgas. Es lassen sich Spaltgasqualitäten erreichen, die den Betrieb eines mit Brennzündung betriebenen Motors mit hohen Verdichtungsverhältnissen ermöglichen.

In der DE 20 2015 002 849 U1 ist ein Gerät zur Verbrennungsoptimierung eines zündfähigen Gemisches aus Luft und Brennstoff beschrieben. Im Inneren des Gerätes ist eine schwingungserzeugende Matrix aus kristallinem Granulat vorgesehen. Mithilfe des Gerätes wird ein für eine optimierte Verbrennung benötigter Hyperschallpegel erzeugt, der eine vollständige Zerlegung von Wasserdampf in Wasserstoff und Sauerstoff bewirkt. Beide Bestandteile werden bei Zündung eines Kraftstoff-Luft-Gemisches wieder zu Wasserdampf verbrannt.

Die DE 41 40 650 A1 offenbart ein Verfahren, bei dem Wasserdampf erzeugt wird, der Wasserdampf unter Rotation durch ein mit einem Katalysator ausgestattetes erstes Rohr eines als Katalysevorrichtung ausgebildeten Wärmetauschers geleitet wird, das Abgas eines Antriebsaggregates unter Rotation durch ein zweites Rohr der Katalysevorrichtung zum Wärmeaustausch mit dem Wasserdampf geleitet wird, das temperaturerniedrigte Abgas aus der Katalysevorrichtung abgeführt wird, der durch die erzeugte Temperaturerhöhung zumindest teilweise in Wasserstoff und Sauerstoff aufgespaltete Wasserdampf aus der Katalysevorrichtung abgeführt wird und das erzeugte Gasgemisch oder Teile hiervon durch Zündung in einem Brennraum zum Antreiben eines Antriebsaggregates verwendet werden.

Die vorliegende Erfindung bezweckt nunmehr die Weiterentwicklung des eingangs beschriebenen Verfahrens. Ihr liegt die Aufgabe zugrunde, ein Verfahren der angegebenen Art zu schaffen, das sich durch einen besonders hohen Wirkungsgrad auszeichnet.

Diese Aufgabe wird erfindungsgemäß durch ein Verfahren zum Betreiben eines Antriebsaggregates gelöst, das die folgenden Schritte umfasst:
Erzeugen von Wasserdampf;
Leiten des Wasserdampfes unter Rotation durch ein mit einem Katalysator ausgestattetes Innenrohr eines als Wirbelrohr ausgebildeten Wärmetauschers;
Leiten des Abgases des Antriebsaggregates unter Rotation durch ein Außenrohr des Wirbelrohres zum Wärmeaustausch mit dem Wasserdampf;
während der Durchleitung des Wasserdampfes und Abgases Bringen des Wirbelrohres durch Schwingungsanregung auf seine Resonanzfrequenz;
Abführen des temperaturerniedrigten Abgases aus dem Wirbelrohr;
Abführen des durch die erzeugte Temperaturerhöhung zumindest teilweise in Wasserstoff und Sauerstoff als Gasgemisch aufgespalteten Wasserdampfes aus dem Wirbelrohr; und
Verwenden des erzeugten Gasgemisches oder von Teilen hiervon durch Zündung in einem Brennraum zum Antreiben eines Antriebselementes des Antriebsaggregates.

Erfindungsgemäß wurde festgestellt, dass durch die beschriebene Schwingungsanregung des Wirbelrohres, um dieses auf seine Resonanzfrequenz zu bringen, im Wirbelrohr eine Temperaturerhöhung erzielbar ist, die die thermolytische Zersetzung des Wasserdampfes begünstigt bzw. in einem kürzeren Zeitraum ermöglicht. Erfindungsgemäß werden daher im Wesentlichen zwei Effekte genutzt: Zum einen wird der durch die rotatorische Bewegung sowohl des Wasserdampfes als auch des Abgases erreichte verstärkte Wärmeaustausch ausgenutzt. Zum anderen wird der durch die erzeugte Schwingung bzw. Vibration des Wirbelrohres mit Resonanzfrequenz generierte Effekt genutzt. Beide Effekte führen gemeinsam zu einer Temperaturerhöhung im Wirbelrohr (naturgemäß abhängig von der Abgastemperatur), die jedoch bei üblichen Abgastemperaturen und beispielsweise einer Eingangstemperatur des Wasserdampfes von 600°C eine Ausgangstemperatur des erzeugten Gasgemisches von etwa 1200°C erzeugt.

Die entsprechende Schwingungsanregung zum Erreichen der Resonanzfrequenz ist von diversen Faktoren abhängig, u. a. von den Dimensionen des Wirbelrohres. Demnach kann man das erfindungsgemäß ausgebildete Wirbelrohr auch als Resonanzrohr bezeichnen.

Beide Rohre, d. h. sowohl das Außenrohr als auch das Innenrohr des Wirbelrohres arbeiten hierbei nach dem Resonanzsystem. Die Dimensionen des Innenrohres sind dabei vorzugsweise so abgestimmt, dass die Resonanzfrequenz des Innenrohres der doppelten Resonanzfrequenz des Außenrohres entspricht. So kann mit einer Frequenz und der gegebenen Subharmonischen sicher gearbeitet werden.

Bei dem erfindungsgemäßen Verfahren wird das im Wirbelrohr erzeugte Gasgemisch (Wasserstoff, Sauerstoff und Wasserdampf) in einen Brennraum des Antriebsaggregates eingeführt und dort gezündet. Durch die entsprechende Reaktion (Knallgasreaktion) wird ein Antriebselement des Antriebsaggregates angetrieben. Erfindungsgemäß kann auch nur ein Teil des erzeugten Gasgemisches als Antriebsmedium eingesetzt werden, beispielsweise nur Wasserstoff.

Zur Zündung kann zusätzlich ein Zündmedium, insbesondere ein Brennstoff auf Kohlenwasserstoffbasis, in den Brennraum eingeführt werden.

Der Temperaturerhöhungseffekt, der sich durch die entsprechende Schwingungsanregung ergibt, wird daher erfindungsgemäß für die gewünschte thermolytische Zersetzung des Wasserdampfes ausgenutzt. Es hat sich hierbei jedoch gezeigt, dass lange Wirbelrohre bzw. Resonanzrohre ihre Resonanzwirkung schnell verlieren. Daher ist die Länge des Rohres entsprechend zu optimieren. Um den Wirkungsgrad eines derartigen Wirbelrohres weiter zu erhöhen, ohne die mögliche Wirklänge zu überschreiten, ist bei einer besonders bevorzugten Ausführungsform der Erfindung das Wirbelrohr in mehrere kaskadenförmig hintereinander angeordnete Wirbelrohreinheiten aufgeteilt, die vom Wasserdampf und vom Abgas passiert werden. Bei dieser Ausführungsform der Erfindung wird daher nicht mit einem einzigen Resonanzrohr gearbeitet, sondern mit mehreren Rohren, die jeweils an ihrem Ende nach dem gleichen Prinzip das Gas in ein weiteres Resonanzrohr einführen, das dann ebenfalls eine Schwingungsanregung sowie Resonanzfrequenz erfährt.

Beispielsweise werden dabei bei einem vier Zylinder aufweisenden Verbrennungsmotor insgesamt 16 Wirbelrohreinheiten vorgesehen, wobei jedem Zylinder vier Wirbelrohreinheiten zugeordnet werden. Das Abgas passiert daher nacheinander die vier Wirbelrohreinheiten eines Zylinders und gelangt dann nach dem vierten Rohr beispielsweise in ein gemeinsames Abgasrohr der vier Zylinder und von dort in einen Auspuff mit Schalldämpfungseinrichtung.

Vorzugsweise wird die Resonanzfrequenz des Wirbelrohres bzw. der jeweiligen Wirbelrohreinheit mithilfe eines Frequenzgenerators erzeugt. Dabei wird das Wirbelrohr bzw. die Wirbelrohreinheit insbesondere im Eingangsbereich der Wasserdampf- und Abgaszuführung vom entsprechend angeordneten Frequenzgenerator beaufschlagt. Insbesondere wird dabei das Wirbelrohr so angeregt, dass das Innenrohr mit der doppelten Resonanzfrequenz wie das Außenrohr schwingt.

Erfindungsgemäß wird dabei vorzugsweise so vorgegangen, dass die Resonanzfrequenz des Wirbelrohres ermittelt und der Frequenzgenerator auf die ermittelte Resonanzfrequenz abgestimmt wird.

Der erfindungsgemäß eingesetzte Frequenzgenerator wirkt somit als Trigger, um die beiden Rohre des Wirbelrohres auf die jeweilige Resonanzfrequenz zu bringen. Auf diese Weise wird ein Start des Systems bewirkt. Als Frequenzgenerator sind alle bekannten Tonfrequenzgeneratoren einsetzbar, so lange sie unempfindlich, hitzebeständig sind und frequenzgenau arbeiten. Es hat sich gezeigt, dass ohne einen solchen Trigger das Wirbelrohr nicht oder nur selten in die notwendige Schwingung übergeht. Der als Frequenzgenerator (zusätzlicher Tonfrequenzerzeuger) ausgebildete Trigger funktioniert sicher, gleichgültig ob bei geringem oder bei heftigem Gasstrom, wenn eine genaue Übereinstimmung der erzeugten Frequenz mit der Resonanzfrequenz des Wirbelrohres erreicht ist.

Bei dem erfindungsgemäßen Verfahren wird vorzugsweise mit dem Katalysator gearbeitet, der sich an einer im Innenrohr angeordneten Stange befindet. "Ein Katalysator" soll hierbei auch die Anordnung von mehreren Katalysatoren oder Katalysatoreinheiten umfassen. Geeignete Katalysatoren zur Initiierung bzw. Förderung der hier beschriebenen thermolytischen Reaktion zur Spaltung von Wasserdampf in Wasserstoff und Sauerstoff sind dem Fachmann bekannt und in der eingangs erwähnten EP 3 156 637 A1 beschrieben.

Die vorliegende Erfindung betrifft ferner ein Antriebsaggregat, mit dem das vorstehend beschriebene Verfahren durchführbar ist. Dieses Aggregat umfasst:
Einrichtungen zur Erzeugung von Wasserdampf, einen als Wirbelrohr ausgebildeten Wärmetauscher mit einem Innenrohr mit Katalysator und einem Außenrohr, Zuführungseinrichtungen für den Wasserdampf in das Innenrohr und das Abgas des Antriebsaggregates in das Außenrohr, so dass beide das Wirbelrohr rotatorisch durchlaufen, Einrichtungen zur Schwingungsanregung des Wirbelrohres, um dieses auf seine Resonanzfrequenz zu bringen, Einrichtungen zur Abführung des Abgases sowie des entstandenen Gasgemisches aus Wasserstoff, Sauerstoff und Wasserdampf aus dem Wirbelrohr und einen Brennraum zum Zünden des Gasgemisches oder eines Teiles hiervon zum Antreiben eines Antriebselementes des Antriebsaggregates.

Der in einem Dampferzeuger des Antriebsaggregates erzeugte Wasserdampf erfährt durch seine rotatorische Bewegung im Innenrohr des Wirbelrohres durch indirekten Kontakt mit dem rotatorisch im Außenrohr des Wirbelrohres bewegten Abgas eine Temperaturerhöhung, die durch das erzeugte Schwingungsverhalten des Wirbelrohres im Resonanzfrequenzbereich beträchtlich verstärkt wird. Auf diese Weise kann die gewünschte thermolytische Zersetzung des Wasserdampfes in die Endprodukte Wasserstoff und Sauerstoff zumindest teilweise stattfinden, und das erhaltene Gasgemisch aus Wasserstoff, Sauerstoff und Wasserdampf wird zumindest teilweise dem Brennraum zugeführt und dort gezündet.

Zur Unterstützung der rotatorischen Bewegung des Abgases ist vorzugsweise auf der Außenseite des Innenrohres und/oder der Innenseite des Außenrohres des Wirbelrohres ein Abgasführungsgewinde vorgesehen. Dieses Gewinde kann sich über die gesamte Oberfläche der Außenseite des Innenrohres und/oder Innenseite des Außenrohres erstrecken. Das Abgas wird dadurch gezwungen, entlang den Gewindegängen des Gewindes zu rotieren und steht dadurch besonders eng und lange mit den Rohrwandungen in Kontakt und garantiert eine wirkungsvolle hohe und lang andauernde Reaktionszeit.

Das Wirbelrohr ist vorzugsweise in mehrere kaskadenförmig hintereinander angeordnete Wirbelrohreinheiten aufgeteilt, wobei jede Wirbelrohreinheit zum Schwingen im Resonanzbereich angeregt wird. Die entsprechenden Einrichtungen zur Schwingungsanregung des Wirbelrohres umfassen einen Frequenzgenerator, der jeweils einem Wirbelrohr bzw. einer Wirbelrohreinheit zugeordnet ist.

Im Innenrohr des Wirbelrohres ist vorzugsweise eine Stange angeordnet, die einen Katalysator oder mehrere Katalysatoren trägt, welche die entsprechende thermolytische Reaktion initiieren oder fördern.

Auch die den Katalysator tragende Stange kann auf ihrer Au-ßenseite und/oder das Innenrohr des Wirbelrohres kann auf seiner Innenseite mit einem Dampfführungsgewinde versehen sein. Auch diese Gewinde können sich über die gesamte Oberfläche der entsprechenden Teile erstrecken. Auch das Medium Wasserdampf wird hierbei gezwungen, entlang den Gewindegängen des Gewindes zu rotieren und steht damit besonders eng und lange mit dem Katalysator in Kontakt und ggf. gleichzeitig mit der sehr heißen Innenseite des Innenrohres, so dass auch diese Maßnahmen zum Erreichen einer wirkungsvollen lang andauernden Reaktionszeit beitragen.

Um eine rotatorische Bewegung des Wasserdampfes und Abgases durch das Wirbelrohr zu erreichen, sind zweckmäßigerweise Einrichtungen angeordnet, die eine tangentiale Einführung und/oder Abführung des Abgases und/oder Wasserdampfes bzw. Gasgemisches bewirken. Diese Einrichtungen umfassen vorzugsweise einen Konus im Endbereich des Innenrohres und/oder Außenrohres, um das entstandene Gasgemisch sowie das Abgas umzulenken und aus dem Wirbelrohr abzuführen.

Die Erfindung wird nachfolgend anhand eine Ausführungsbeispiels in Verbindung mit der Zeichnung im Einzelnen erläutert. Es zeigen:
- Figur 1: ein schematisches Blockschaubild eines Antriebsaggregates;
- Figur 2: einen Längsschnitt durch einen als Wirbelrohr ausgebildeten Wärmetauscher, der bei diesem Antriebsaggregat Verwendung findet;
- Figur 3: eine Draufsicht auf den Wärmetauscher der Figur 2; und
- Figur 4: eine schematische Seitenansicht einer weiteren Ausführungsform eines Wärmetauschers.

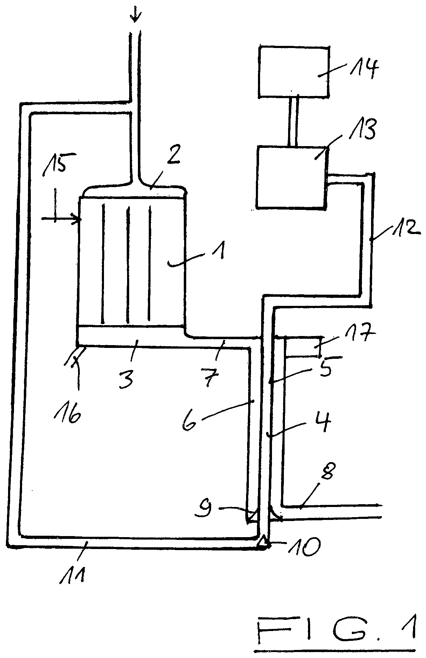

In der schematischen Darstellung der Figur 1 ist ein Antriebsaggregat gezeigt, das einen im Wesentlichen herkömmlichen Verbrennungsmotor 1 aufweist, welcher als Dieselmotor mit vier Zylindern ausgebildet ist. Der Motor weist eine Einrichtung 2 zur Einführung von Verbrennungsluft in die jeweiligen Zylinder auf, wobei es sich hierbei beispielsweise um über einen Turbolader komprimierte Verbrennungsluft handeln kann. Ferner besitzt der Motor eine Kraftstoffeinführeinrichtung 15, die beispielsweise in Form von Einspritzventilen zum Einspritzen von Dieselkraftstoff ausgebildet sein kann. Die vom Motor erzeugten Abgase werden über eine Abgasabführeinrichtung 3 in Form eines Abgaskrümmers abgeführt. Insoweit kann der hier beschriebene Motor von herkömmlicher Bauart sein.

Das Antriebsaggregat besitzt des Weiteren einen elektrischen Verdampfer 13, dem von einem Wasserspeicher 14 Wasser zugeführt wird, das im Verdampfer verdampft wird. Es entsteht dabei Wasserdampf, der beispielsweise eine Temperatur von etwa 120 °C und einen Dampfdruck von mindestens 3 bar besitzt.

Der im Verdampfer 13 erzeugte Wasserdampf wird über eine geeignete Leitung 12 einem Wärmetauscher 4 zugeführt. Der Wärmetauscher 4 ist in Form eines Doppelmantelrohres ausgebildet, das einen Innenraum 5 sowie einen diesen umgebenden Außenraum 6 besitzt. Über die Leitung 12 wird der erzeugte Wasserdampf tangential in das obere Ende des Innenraumes 5 eingeführt. Durch diese Art der Einführung wird eine rotatorische Bewegung des Dampfes erzeugt, der im Innenraum 5 des Rohres rotatorisch abwärts bewegt wird.

Das vom Verbrennungsmotor 1 erzeugte Abgas wird über ein sehr kurzes Rohr 7 ohne jede Biegung abgeführt und tangential in das obere Ende des Außenraumes 6 eingeführt. Durch diese Art der Einführung wird das Abgas mit einer rotatorischen Bewegung beaufschlagt, so dass dieses um den Innenraum 5 herum rotatorisch im Außenraum 6 nach unten geführt wird. Durch diesen Wirbelstromeffekt von beiden Medien wird ein inniger Kontakt mit langer Verweildauer erzielt, so dass der im Innenraum 5 abwärts geführte Dampf eine entsprechende Temperaturerhöhung erfährt.

Innerhalb des Innenraumes 5 des Wärmetauschers befindet sich mindestens ein Katalysator, der die thermolytische Zersetzung des erzeugten Wasserdampfes in Wasserstoff und Sauerstoff bei der erreichten erhöhten Temperatur initiiert.

Damit die rotatorische Abwärtsbewegung des Wasserdampfes und der Abgase in den Räumen 5 und 6 aufrechterhalten wird und durch die Abführung dieser Medien aus dem Wärmetauscher keine Abbremsung bewirkt wird, sind gegenüber den jeweiligen Abführungsleitungen 8 und 11 konusförmige Umlenkkörper 9, 10 in den entsprechenden Räumen 5, 6 angeordnet. Diese Umlenkkörper bewirken eine radiale Ablenkung des jeweiligen Dampf- bzw. Gasstromes zu einem tangential in den Außenraum 6 mündenden Abgasabführrohr 8 und einer tangential in den Innenraum 5 mündenden Gasabführleitung 11. Über die Gasabführleitung 11 wird das erhaltene Wasserstoff-Sauerstoff-Restdampf-Gemisch in den Luftkanal der Luftzuführeinrichtung 2 des Verbrennungsmotors 1 eingeführt. Die entsprechenden Zylinder werden daher mit einem Gemisch aus komprimierter Luft sowie Wasserstoff-Sauerstoff-Wasserdampf beaufschlagt. Durch die Zündung des eingespritzten Dieselkraftstoffes wird eine Knallgasreaktion des eingeführten Gemisches initiiert. Die damit verbundene Gasexpansion bewirkt eine entsprechende Kolbenbewegung.

Das durch die Knallgasreaktion erzeugte Wasser wird aufgefangen und über ein Leitungssystem 16 abgeführt und kann wieder dem Wasserspeicher 14 zur Gewinnung von neuem Wasserdampf zugeführt werden. Die durch die Verbrennung des Kraftstoffes erzeugten Abgase werden dem Wärmetauscher 4 zugeführt.

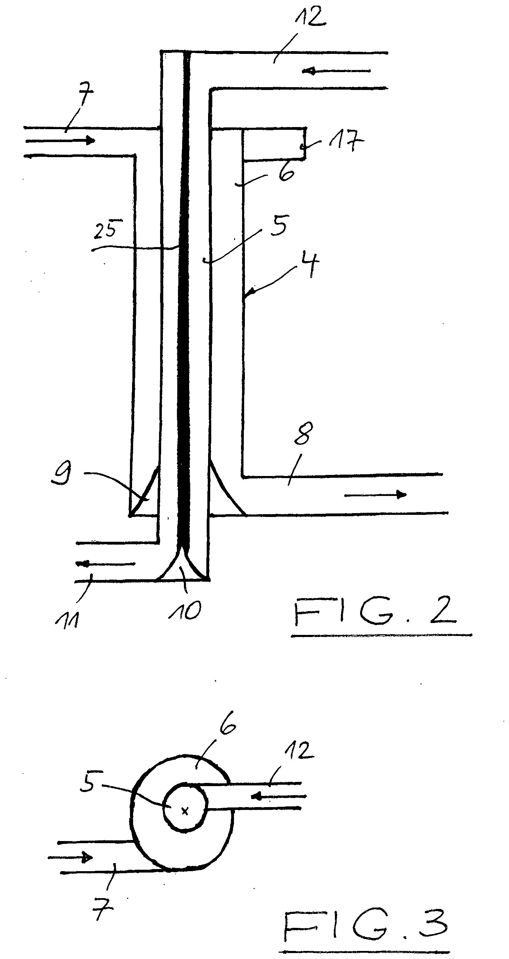

Figur 2 zeigt einen vergrößerten Längsschnitt durch den Wärmetauscher 4. Durch die tangentiale Einführung des Wasserdampfes über die Leitung 12 und des Abgases über die Leitung 7 sowie die tangentiale Abführung beider Medien, unterstützt durch die konusförmigen Umlenkkörper 9, 10, wird ein entsprechender Wirbelstromeffekt erzeugt.

Im Innenraum 5 des Wärmetauschers ist ferner zentral eine Stange 25 angeordnet, an der mindestens ein konfigurierter Katalysator fixiert ist, um die gewünschte thermolytische Reaktion zu initiieren. Geeignete Katalysatoren sind beispielsweise in der EP 3 156 637 A1 genannt. Die Stange 25 erstreckt sich im Wesentlichen über die gesamte Höhe des Innenraumes 5.

Figur 3 zeigt eine Draufsicht auf den Wärmetauscher. Man erkennt die Wasserdampfzuführleitung 12, die tangential in den Innenraum 5 des Wärmetauschers mündet, sowie die Abgaszuführleitung 7, die tangential in den Außenraum 6 des Wärmetauschers mündet. Hierdurch wird beiden Medien eine rotarische Bewegung aufgeprägt.

Das in der vorstehenden Beschreibung erläuterte Antriebsaggregat entspricht im Wesentlichen dem in der EP 3 156 637 A1 beschriebenen Antriebsaggregat. Neu ist nunmehr, dass der als Wirbelrohr ausgebildete Wärmetauscher 4 in seinem Eingangsbereich für das Abgas und den Wasserdampf einen Frequenzgenerator 17 aufweist, mit dem dem Wärmetauscher 4 Schwingungen aufgeprägt werden, bis die Resonanzfrequenz des Innenrohres bzw. Innenraumes 5 und des Außenrohres bzw. Außenraumes 6 des Wirbelrohres erreicht ist. Der Frequenzgenerator 17 ist hierbei vorzugsweise so abgestimmt und die Dimensionen des Wirbelrohres sind so gewählt, dass die sich am Innenrohr einstellende Resonanzfrequenz doppelt so groß ist wie die sich am Außenrohr einstellende Resonanzfrequenz. Der Frequenzgenerator 17 wirkt hierbei als Trigger, der das Wirbelrohr in der geschilderten Weise zum Schwingen bringt.

Wenn die entsprechenden.Resonanzfrequenzen erreicht sind, wird im Wirbelrohr eine wesentliche Temperaturerhöhung erzielt, die beispielsweise von einer Eingangstemperatur von etwa 120°C zu einer Ausgangstemperatur von etwa 1200°C ansteigt.

Durch die erzielte Temperaturerhöhung wird der Wirkungsgrad der thermolytischen Zersetzung des Wasserdampfes in Wasserstoff und Sauerstoff wesentlich erhöht. Die Reaktion läuft daher schneller ab als in dem Fall ohne Schwingungsanregung und führt zu einer höheren Ausbeute.

Das durch die thermolytische Zersetzung entstandene Gasgemisch aus Wasserstoff, Sauerstoff und restlichem Wasserdampf wird aus dem Wirbelrohr herausgeführt und gelangt über die Leitung 11 in den Brennraum des Verbrennungsmotors 1, in dem es gezündet wird und über die dadurch initiierte Knallgasreaktion einen Kolben antreibt.

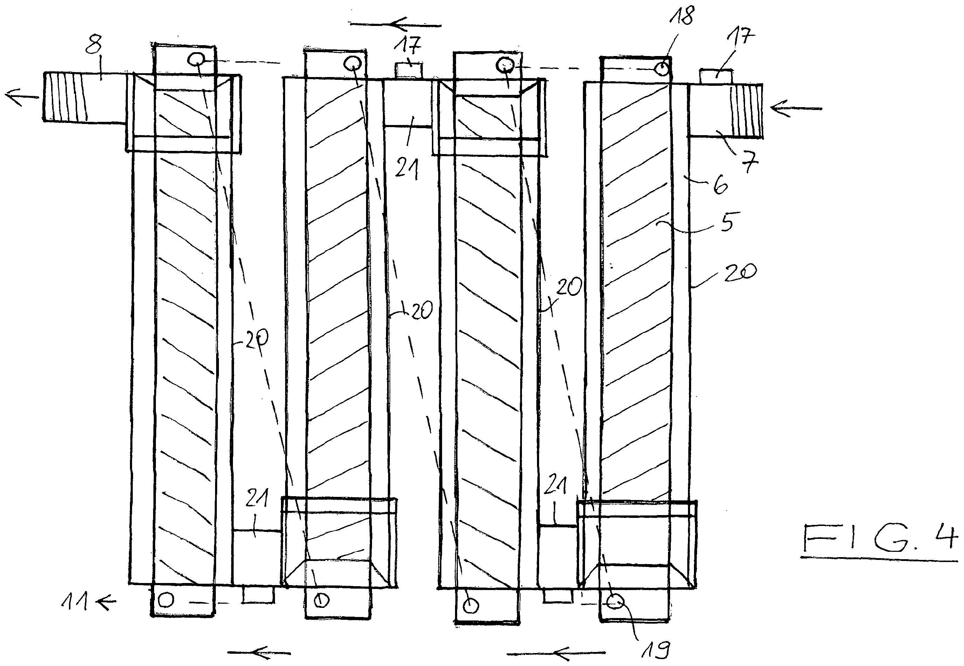

Figur 4 zeigt eine schematische Seitenansicht eines anders ausgebildeten Wärmetauschers. Dieser ist bei der hier gezeigten Ausführungsform nicht in der Form eines einzigen Wirbelrohres ausgebildet, sondern umfasst vier kaskadenförmig hintereinander geschaltete Wirbelrohreinheiten 20. Diese vier Wirbelrohreinheiten 20 sind wie das vorstehend beschriebene Wirbelrohr 4 ausgebildet und besitzen ein Innenrohr sowie ein Außenrohr, wobei der zwischen den Rohren gebildete Außenraum 6 vom Abgas des Antriebsaggregates rotatorisch durchströmt wird, während der vom Innenrohr gebildete Innenraum 5 vom Wasserdampf rotatorisch durchströmt wird. Nach dem Passieren der ersten Wirbelrohreinheit 20 gelangt der über einen Gaseinlass 18 in das Innenrohr eingeführte Wasserdampf über einen Gasauslass 19 und eine nur schematisch dargestellte Verbindungsleitung in die zweite Wirbelstromeinheit etc. Nach dem Verlassen der letzten Wirbelstromeinheit wird das entstandene Gasgemisch aus Wasserstoff, Sauerstoff und restlichem Wasserdampf dem Brennraum des Verbrennungsmotors zugeführt.

Das Abgas gelangt über die Leitung 7 in den Außenraum 6 der ersten Wirbelstromeinheit und von dort über ein Verbindungsstück 21 in den Außenraum der zweiten Wirbelstromeinheit etc. Nach dem Verlassen der letzten Wirbelstromeinheit wird das Abgas über eine Leitung 8 dem Auspuffsystem des Verbrennungsmotors zugeführt.

Jeder Wirbelrohreinheit 20 ist ein Frequenzgenerator 17 zugeordnet, der bei dieser Ausführungsform an der Abgaszuführleitung 7 angeordnet ist. Die anderen Frequenzgeneratoren 17 sind an den jeweiligen Verbindungsstücken 21 vorgesehen. Hiermit werden die Wirbelstromeinheiten 20 in Schwingungen versetzt, bis sie ihre Resonanzfrequenzen erreicht haben, wobei diese Resonanzfrequenzen aufrechterhalten werden. Auch hier wird die Abstimmung so durchgeführt, dass die Resonanzfrequenz des Innenrohres doppelt so hoch ist wie die des Außenrohres.

Durch die kaskadenförmige Hintereinanderschaltung der vier Wirbelrohreinheiten wird die Anordnung von zu langen Wirbelrohren bzw. Resonanzrohren vermieden, da diese ihre Resonanzwirkung schnell verlieren. Um die Umwandlungsrate zu erhöhen, ohne die mögliche Wirklänge zu überschreiten, wird die hier beschriebene Kaskadenanordnung eingesetzt, mit der Ausgangstemperaturen erreicht werden können, die der dreifachen Eingangstemperatur oder mehr entsprechen.

Die vier Rohrsysteme können so angeordnet werden, dass viereckige Module entstehen. Die Module können dann nebeneinander an einem Motor angebracht werden. Eine Vollisolierung (nicht gezeigt) ist vorgesehen, die zur Wärme- und Schallisolierung dient.

Auch hier sind in den Innenrohren der einzelnen Wirbelrohreinheiten Katalysatoren vorgesehen, die an entsprechenden zentrisch angeordneten Stangen angeordnet sind. Wegen der unterschiedlichen Temperaturen in den Wirbelrohreinheiten (Resonanzrohreinheiten) in der Kaskade sind in den einzelnen Einheiten unterschiedliche Katalysatoren angeordnet.

Die Erfindung ist nicht auf übliche Verbrennungsmotoren beschränkt, sondern kann auch bei anderen Antriebsaggregaten, beispielsweise Turbinen und Gasmotoren, Anwendung finden.

## Patentansprüche

1. Verfahren zum Betreiben eines Antriebsaggregates mit den folgenden Schritten:
Erzeugen von Wasserdampf;
Leiten des Wasserdampfes unter Rotation durch ein mit einem Katalysator ausgestattetes Innenrohr eines als Wirbelrohr ausgebildeten Wärmetauschers (4) ;
Leiten des Abgases des Antriebsaggregates unter Rotation durch ein Außenrohr des Wirbelrohres zum Wärmeaustausch mit dem Wasserdampf;
während der Durchleitung des Wasserdampfes und Abgases Bringen des Wirbelrohres durch Schwingungsanregung auf seine Resonanzfrequenz;
Abführen des temperaturerniedrigten Abgases aus dem Wirbelrohr;
Abführen des durch die erzeugte Temperaturerhöhung zumindest teilweise in Wasserstoff und Sauerstoff als Gasgemisch aufgespalteten Wasserdampfes aus dem Wirbelrohr; und
Verwenden des erzeugten Gasgemisches oder von Teilen hiervon durch Zündung in einem Brennraum zum Antreiben eines Antriebselementes des Antriebsaggregates.

2. Verfahren nach Anspruch 1, **dadurch gekennzeichnet, dass** zur Zündung zusätzlich ein Zündmedium, insbesondere ein Brennstoff auf Kohlenwasserstoffbasis, in den Brennraum eingeführt wird.

3. Verfahren nach Anspruch 1 oder 2, **dadurch gekennzeichnet, dass** das Wirbelrohr in mehrere kaskadenförmig hintereinander angeordnete Wirbelrohreinheiten (20) aufgeteilt ist, die vom Wasserdampf und dem Abgas passiert werden.

4. Verfahren nach einem der vorangehenden Ansprüche, **dadurch gekennzeichnet, dass** die Resonanzfrequenz des Wirbelrohres mithilfe eines Frequenzgenerators (17) erzeugt wird.

5. Verfahren nach Anspruch 4, **dadurch gekennzeichnet, dass** das Wirbelrohr im Eingangsbereich der Wasserdampf- und Abgaszuführung vom Frequenzgenerator (17) beaufschlagt wird.

6. Verfahren nach einem der vorangehenden Ansprüche **dadurch gekennzeichnet, dass** das Wirbelrohr so angeregt wird, dass das Innenrohr mit der doppelten Resonanzfrequenz wie das Außenrohr schwingt.

7. Verfahren nach einem der vorangehenden Ansprüche, **dadurch gekennzeichnet, dass** mit dem Katalysator gearbeitet wird, der sich an einer im Innenrohr angeordneten Stange (25) befindet.

8. Verfahren nach Anspruch 4 **dadurch gekennzeichnet, dass** die Resonanzfrequenz des Wirbelrohres ermittelt und der Frequenzgenerator (17) auf die ermittelte Resonanzfrequenz abgestimmt wird.

9. Verfahren nach einem der vorangehenden Ansprüche, **dadurch gekennzeichnet, dass** das Abgas nach dem Passieren des Wirbelrohres bzw. der letzten Wirbelrohreinheit (20) in ein Abgasrohr (8) geführt und in einen Auspuff mit Schalldämpfer abgeleitet wird.

10. Antriebsaggregat zur Durchführung des Verfahrens nach einem der Ansprüche 1 bis 9 mit Einrichtungen zur Erzeugung von Wasserdampf, einem als Wirbelrohr ausgebildeten Wärmetauscher (4) mit einem Innenrohr mit Katalysator und einem Außenrohr, Zuführeinrichtungen für den Wasserdampf in das Innenrohr und das Abgas des Antriebsaggregates in das Außenrohr, so dass beide das Wirbelrohr rotatorisch durchlaufen, Einrichtungen zur Schwingungsanregung des Wirbelrohres, um dieses auf seine Resonanzfrequenz zu bringen, Einrichtungen zur Abführung des Abgases sowie des entstandenen Gasgemisches aus Wasserstoff, Sauerstoff und Wasserdampf aus dem Wirbelrohr und einem Brennraum zum Zünden des Gasgemisches oder eines Teiles hiervon zum Antreiben eines Antriebselementes des Antriebsaggregates.

11. Antriebsaggregat nach Anspruch 10, **dadurch gekennzeichnet, dass** auf der Außenseite des Innenrohres und/oder der Innenseite des Außenrohres des Wirbelrohres ein Abgasführungsgewinde vorgesehen ist.

12. Antriebsaggregat nach Anspruch 10 oder 11, **dadurch gekennzeichnet, dass** das Wirbelrohr in mehrere kaskadenförmig hintereinander angeordnete Wirbelrohreinheiten (20) aufgeteilt ist.

13. Antriebsaggregat nach einem der Ansprüche 10 bis 12, **dadurch gekennzeichnet, dass** die Einrichtungen zur Schwingungsanregung des Wirbelrohres einen Frequenzgenerator (17) umfassen.

14. Antriebsaggregat nach einem der Ansprüche 10 bis 13, **dadurch gekennzeichnet, dass** im Innenrohr des Wirbelrohres eine einen Katalysator tragende Stange (25) angeordnet ist.

15. Antriebsaggregat nach Anspruch 14, **dadurch gekennzeichnet, dass** die den Katalysator tragende Stange (25) auf ihrer Außenseite und/oder das Innenrohr des Wirbelrohres auf seiner Innenseite mit einem Dampfführungsgewinde versehen ist.

16. Antriebsaggregat nach einem der Ansprüche 10 bis 15, **dadurch gekennzeichnet, dass** im oder am Wirbelrohr Einrichtungen angeordnet sind, die eine tangentiale Einführung und/oder Abführung des Abgases und/oder Wasserdampfes bzw. Gasgemisches bewirken.

## Claims

1. A method of driving a power unit comprising the following steps:
generating water vapor;
directing the water vapor under rotation through an inner tube provided with a catalyst of a heat exchanger (4) formed as vortex tube;
directing the exhaust gas of the power unit under rotation through an outer tube of the vortex tube for a heat exchange with the water vapor;
while leading through the water vapor and exhaust gas, bringing the vortex tube to its resonant frequency by oscillatory stimulation;
discharging the temperature-reduced exhaust gas from the vortex tube;
discharging the water vapor from the vortex tube split by the generated temperature elevation at least partly into hydrogen and oxygen as gas mixture; and
using the generated gas mixture or parts thereof by ignition in a combustion room for driving a drive element of the power unit.

2. The method according to claim 1, **characterized in that** additionally an ignition medium, especially a fuel on hydrocarbon basis, is introduced into the combustion room for the ignition.

3. The method according to claim 1 or 2, **characterized in that** the vortex tube is provided in several vortex tube units (20) arranged one behind the other in a cascade-like manner which are passed by the water vapor and the exhaust gas.

4. The method according to one of the preceding claims, **characterized in that** the resonant frequency of the vortex tube is generated by means of a frequency generator (17).

5. The method according to claim 4, **characterized in that** the vortex tube is applied by the frequency generator (17) in the inlet region of the water vapor and exhaust gas feeding.

6. The method according to one of the preceding claims, **characterized in that** the vortex tube is stimulated in such a manner that the inner tube oscillates with the double resonant frequency as the outer tube.

7. The method according to one of the preceding claims, **characterized in that** it is operated with a catalyst located at a bar (25) in the inner tube.

8. The method according to claim 4, **characterized in that** the resonant frequency of the vortex tube is ascertained and the frequency generator (17) is tuned to the ascertained resonant frequency.

9. The method according to one of the preceding claims, **characterized in that** the exhaust gas is introduced into an exhaust gas tube (8) after passage of the vortex tube or the last vortex tube unit (20) and is led off into an exhaust with sound absorber.

10. A power unit for carrying out the method according to one of the claims 1 to 9 comprising means for generating water vapor, a heat exchanger (4) formed as vortex tube with an inner tube with catalyst and an outer tube, supply means for the water vapor into the inner tube and the exhaust gas of the power unit into the outer tube so that both pass the vortex tube in a rotary manner, means for oscillatory stimulation of the vortex tube in order to bring the same to its resonant frequency, means for discharging the exhaust gas as well as the generated gas mixture of hydrogen, oxygen and water vapor from the vortex tube into a combustion room for igniting the gas mixture or a part thereof for driving a drive element of the drive unit.

11. The power unit according to claim 10, **characterized in that** an exhaust gas guide thread is provided at the outer side of the inner tube and/or the inner side of the outer tube of the vortex tube.

12. The power unit according to claim 10 or 11, **characterized in that** the vortex tube is divided into several vortex tube units (20) arranged one behind the other in a cascade-like manner.

13. The power unit according to one of the claims 10 to 12, **characterized in that** the means for oscillatory stimulation of the vortex tube comprise a frequency generator (17).

14. The power unit according to one of the claims 10 to 13, **characterized in that** a bar (25) bearing a catalyst is located in the inner tube of the vortex tube.

15. The power unit according to claim 14, **characterized in that** the bar (25) bearing the catalyst is arranged on its outer side and/or the inner tube of the vortex tube is arranged on its inner side with a vapor guide thread.

16. The power unit according to one of the claims 10 to 15, **characterized in that** means are arranged in or at the vortex tube which cause a tangential introduction and/or discharge of the exhaust gas and/or of the water vapor or the gas mixture.

## Revendications

1. Procédé de fonctionnement d'un groupe d'entraînement avec les étapes suivantes consistant à :
générer de la vapeur d'eau ;
faire passer la vapeur d'eau en rotation dans un tube intérieur, équipé d'un catalyseur d'un échangeur de chaleur (4) conçu comme un tube vortex ;
faire passer les gaz d'échappement du groupe d'entraînement en rotation dans un tube extérieur du tube vortex pour l'échange de chaleur avec la vapeur d'eau ;
amener le tube vortex à sa fréquence de résonance par excitation d'oscillation pendant l'acheminement de la vapeur d'eau et des gaz d'échappement;
évacuer du tube vortex les gaz d'échappement à température réduite ;
évacuer du tube vortex la vapeur d'eau au moins partiellement décomposée en hydrogène et en oxygène sous forme de mélange gazeux par l'augmentation de température générée ; et
utiliser le mélange gazeux généré ou des parties de celui-ci par allumage dans une chambre de combustion pour entraîner un élément d'entraînement du groupe d'entraînement.

2. Procédé selon la revendication 1, **caractérisé en ce qu'**un agent d'allumage, en particulier un combustible à base d'hydrocarbures, est en outre introduit dans la chambre de combustion pour l'allumage.

3. Procédé selon la revendication 1 ou 2, **caractérisé en ce que** le tube vortex est divisé en plusieurs unités de tube vortex (20) disposées en cascade les unes derrière les autres, à travers lesquelles passent la vapeur et les gaz d'échappement.

4. Procédé selon l'une quelconque des revendications précédentes, **caractérisé en ce que** la fréquence de résonance du tube vortex est générée à l'aide d'un générateur de fréquence (17).

5. Procédé selon la revendication 4, **caractérisé en ce que** le tube vortex est sollicité par le générateur de fréquence (17) dans la zone d'entrée de l'alimentation en vapeur d'eau et en gaz d'échappement.

6. Procédé selon l'une quelconque des revendications précédentes, **caractérisé en ce que** le tube vortex est excité de sorte que le tube intérieur oscille à deux fois la fréquence de résonance du tube extérieur.

7. Procédé selon l'une quelconque des revendications précédentes, **caractérisé en ce que** le catalyseur, qui se trouve sur une tige (25) disposée dans le tube intérieur, est utilisé.

8. Procédé selon la revendication 4, **caractérisé en ce que** la fréquence de résonance du tube vortex est déterminée et le générateur de fréquence (17) est adapté à la fréquence de résonance déterminée.

9. Procédé selon l'une quelconque des revendications précédentes, **caractérisé en ce que** les gaz d'échappement, après avoir passé le tube vortex ou la dernière unité de tube vortex (20), sont guidés dans un tuyau d'échappement (8) et évacués dans un échappement avec silencieux.

10. Groupe d'entraînement pour la mise en oeuvre du procédé selon l'une quelconque des revendications 1 à 9 avec des dispositifs de génération de vapeur d'eau, un échangeur de chaleur (4) conçu comme tube vortex avec un tube intérieur avec catalyseur et un tube extérieur, des dispositifs d'alimentation pour la vapeur d'eau dans le tube intérieur et les gaz d'échappement du groupe d'entraînement dans le tube extérieur, de sorte que tous deux traversent le tube vortex de manière rotative, des dispositifs pour l'excitation d'oscillation du tube vortex pour l'amener à sa fréquence de résonance, des dispositifs d'évacuation des gaz d'échappement et du mélange gazeux résultant d'hydrogène, d'oxygène et de vapeur d'eau du tube vortex et une chambre de combustion pour allumer le mélange gazeux ou une partie de celui-ci pour entraîner un élément d'entraînement du groupe d'entraînement.

11. Groupe d'entraînement selon la revendication 10, **caractérisé en ce qu'**un filetage d'évacuation de gaz d'échappement est prévu sur le côté extérieur du tube intérieur et/ou sur le côté intérieur du tube extérieur du tube vortex.

12. Groupe d'entraînement selon la revendication 10 ou 11, **caractérisé en ce que** le tube vortex est divisé en plusieurs unités de tube vortex (20) disposées en cascade les unes derrière les autres.

13. Groupe d'entraînement selon l'une quelconque des revendications 10 à 12, **caractérisé en ce que** les dispositifs d'excitation d'oscillation du tube vortex comprennent un générateur de fréquence (17).

14. Groupe d'entraînement selon l'une quelconque des revendications 10 à 13, **caractérisé en ce qu'**une tige (25) portant un catalyseur est disposée dans le tube intérieur du tube vortex.

15. Groupe d'entraînement selon la revendication 14, **caractérisée en ce que** la tige (25) portant le catalyseur est dotée sur son côté extérieur et/ou le tube intérieur du tube vortex est doté sur son côté intérieur d'un filetage d'évacuation de vapeur.

16. Groupe d'entraînement selon l'une quelconque des revendications 10 à 15, **caractérisé en ce que** des dispositifs sont disposés dans ou sur le tube vortex, qui effectuent une introduction et/ou une évacuation tangentielle des gaz d'échappement et/ou de la vapeur ou du mélange gazeux.
